# EUROPÄISCHE PATENTSCHRIFT

(11) **EP 0 809 427 B1**
(45) Veröffentlichungstag und Bekanntmachung des Hinweises auf die Patenterteilung: **07.10.1998**
(21) Anmeldenummer: 96900319.3
(22) Anmeldetag: 12.01.1996
(51) Int. Cl.: A01C 17/00

(54) **ZENTRIFUGALDÜNGERSTREUER**
CENTRIFUGAL FERTILISER SPREADER
EPANDEUR CENTRIFUGE POUR ENGRAIS

(30) Priorität: 15.02.1995 DE 19504983
(43) Veröffentlichungstag der Anmeldung: 03.12.1997
(73) Patentinhaber: Amazonen-Werke H. Dreyer GmbH & Co. KG, D-49202 Hasbergen (DE)
(72) Erfinder: DREYER, Heinz, D-49205 Hasbergen (DE)
(74) Vertreter: Grünecker, Kinkeldey, Stockmair & Schwanhäusser Anwaltssozietät
(86) Internationale Anmeldenummer: EP9600125
(87) Internationale Veröffentlichungsnummer: WO9625027

(56) Entgegenhaltungen:
- DE-A- 3 920 778
- US-A- 2 526 081

## Beschreibung

Die Erfindung betrifft einen Zentrifugaldüngerstreuer gemäß des Oberbegriffes des Patentanspruches 1.

Ein derartiger Zentrifugaldüngerstreuer ist beispielsweise in der DE-OS 39 20 778 beschrieben.

Die Einstellhebel und die mit den Einstellhebeln zusammenwirkenden Skalen und Anschläge sind bei diesem bekannten Streuer dicht oberhalb der Schleuderscheiben auf der Rückseite des Zentrifugaldüngerstreuers, d.h. auf der den Dreipunktankupplungselementen abgewandten Seite des Streuers, im Bereich des dachförmigen Mittelteiles angeordnet. Die Anschläge und Einstellskalen sind gegenüber Streuern, bei denen die Anschläge und Skalen auf der Vorderseite angeordnet sind, schon relativ gut zugänglich. Sie befinden sich jedoch immer noch im unteren Bereich des Düngerstreuers. Weiterhin befinden sich die Anschläge und Skalen in einem Bereich, in dem sie immer durch Düngerstaub verschmutzen, weil sie zu nah an den Streuscheiben angeordnet sind. Bereits nach kurzer Einsatzzeit sind die Skalen nicht mehr lesbar. Vor einer neuen Einstellung müssen die Skalen erst gesäubert werden. Desweiteren ist der Verstellmechanismus für die Anschläge ebenfalls mit Düngerstaub behaftet. Weiterhin muß sich die Bedienungsperson bücken oder hinknien, um in bequemer Weise die Skalen ablesen zu können. Da der Anschlagmechanismus mit Düngerstaub verschmutzt ist, bekommt der Bediener der Maschine Dünger an den Händen, welches unerwünscht ist.

Der Erfindung liegt die Aufgabe zugrunde, die Anschläge und Skalen in einem Bereich anzuordnen, der bequem zugänglich ist und gleichzeitig nicht oder nur relativ wenig mit Düngerstaub verschmutzt wird.

Diese Aufgabe wird erfindungsgemäß durch die kennzeichnenden Maßnahmen des Anspruches 1 gelöst. Infolge dieser Maßnahmen gelingt es in überraschend einfacher Weise, die Anschläge mit den Skalen in einem Bereich anzuordnen, der optimal bequem zugänglich ist. Hierbei ist von entscheidender Bedeutung, daß der Behälter des Düngerstreuers sich von unten von dem Ausfluß- und Dosierbereich des Düngerstreuers nach oben-hinten erstreckt. Wenn nun die Anschläge und Einstellskalen in erfindungsgemäßer Weise angeordnet sind, sind sie gegenüber der bekannten Anordnung nach hinten-oben verlegt und befinden sich somit in einem optimal bequem zugänglich und sauberen 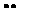 Hände-Augen-Bereich" der Bedienungsperson. Die Bedienungsperson braucht sich zum Verstellen der Einstellhebel und der Anschläge quasi nicht mehr zu bücken oder hinzuknien, sondern sie kann bequem aufrecht stehend die Einstellung vornehmen.

Desweiteren befinden sich die Anschläge und Skalen sowie die Einstellhebel in einem relativ geschützten Raum. Weiterhin wird durch die Anordnung der Einstellhebel um zumindest annähernd in Fahrtrichtung verlaufende Achsen eine gut ablesbare sowie kompakte Bauweise und Anordnung der Einstellmechanismen im hinteren Bereich des Schleuderdüngerstreuers erreicht. Somit sind also die Skalen und die Anschlagelemente sowie die Einstellbereiche der Einstellhebel gut sichtbar, sie bleiben sauber und liegen geschützt und sie stehen nicht sehr weit vom Behälter ab. Desweiteren bilden sie keine Verletzungsgefahr für die Bedienungsperson und werden beim Transport nicht so leicht beschädigt. Die Verbindungshebel können dicht an der hinteren Vorratsbehälterwand nach oben geführt werden. Sie behalten ihre Präzision und Funktion in vorbildlicher Weise bei. Desweiteren können die Skalen für die Einstellhebel dicht zusammengelegt werden, so daß die Einstellungen für die beiden Dosierorgane gleichzeitig leicht ablesbar sind.

Eine einfache Verbindung der Schieber mit den Einstellhebeln wird dadurch erreicht, daß zwischen den Schiebern und/oder den Übertragungshebeln einerseits und den Einstellhebeln andererseits mittels Gelenken Verbindungselemente angeordnet sind.

Damit in jedem Falle eine sehr genaue Einstellung der Schieber und somit eine genaue Einstellung der Schieber gegenüber den Auslauföffnungen gewährleistet ist, ist vorgesehen, daß zwischen dem Vorratsbehälter und/oder Rahmen und den Einstellhebeln Federn derart angeordnet sind, daß die Verbindungselemente immer auf Zug belastet sind. Infolge dieser Maßnahmen wird sichergestellt, daß evtl. vorhandenes Spiel in dem Übertragungsgestänge eliminiert wird.

Damit die Anschläge und Skalen sich außerhalb des stark durch Düngerstaub verschmutzen Bereiches befinden, ist vorgesehen, daß die Einstellhebel/Anschläge und Skalen sich zumindest 40-50 cm oberhalb der Streuorgane befinden. Somit sind also die Einstellhebel, Skalen und Anschläge außerhalb des Bereiches, in dem sich während des Betriebes Düngerstaub ablagert, angeordnet. Hierbei kann vorgesehen sein, daß die Skalen zumindest annähernd bis an das obere Ende des trichterförmigen Bereiches des Vorratsbehälters reichen.

Die Skalen und Anschläge können in einer aufrechten Ebene oder leicht schräg von oben nach hinten verlaufend angeordnet sein.

Weitere Einzelheiten der Erfindung sind den übrigen Unteransprüchen, der Beispielsbeschreibung und den Zeichnungen zu entnehmen. Hierbei zeigen
- Fig.1: den Düngerstreuer in der Ansicht von hinten,
- Fig.2: den Düngerstreuer in Seitenansicht,
- Fig.3: den Einstellmechanismus in der Ansicht von hinten im vergrößerten Maßstab,
- Fig.4: den Einstellmechanismus in Seitenansicht in dem Maßstab gemäß Fig.3,
- Fig.5: den Einstellmechanismus in vergrößertem Maßstab in Teilansicht,
- Fig.6: den Einstellmechanismus in Seitenansicht in dem Maßstab gemäß Fig.5,
- Fig.7: einen weiteren Düngerstreuer in Seitenansicht und
- Fig.8: den Düngerstreuer gemäß Fig.7 in der Ansicht von hinten.

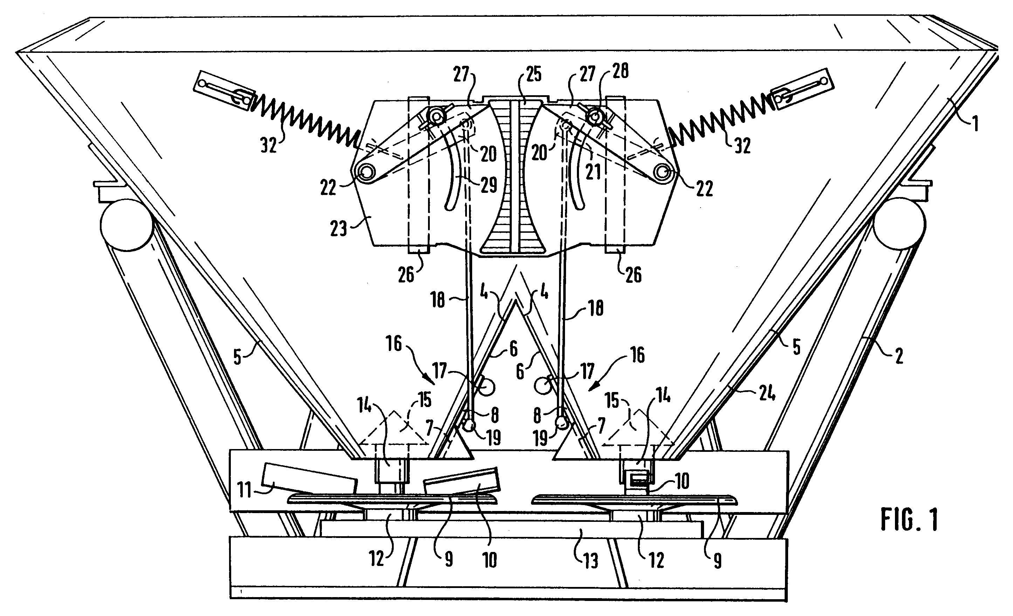

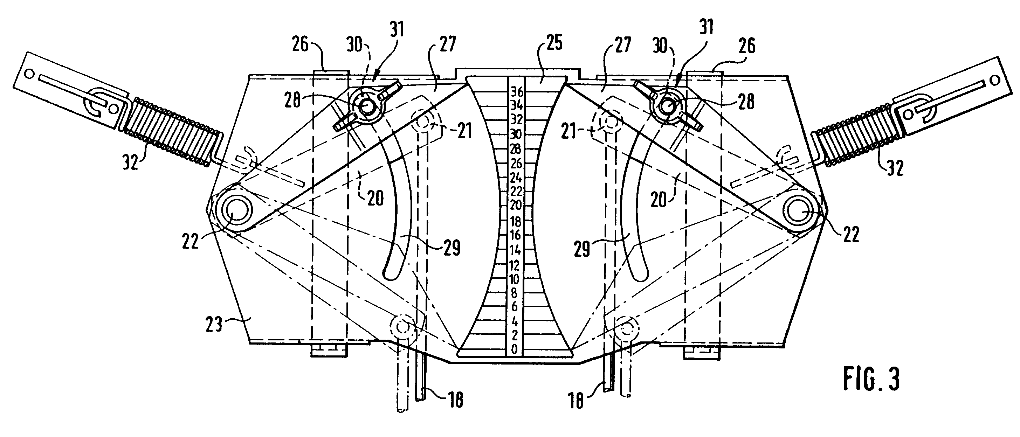

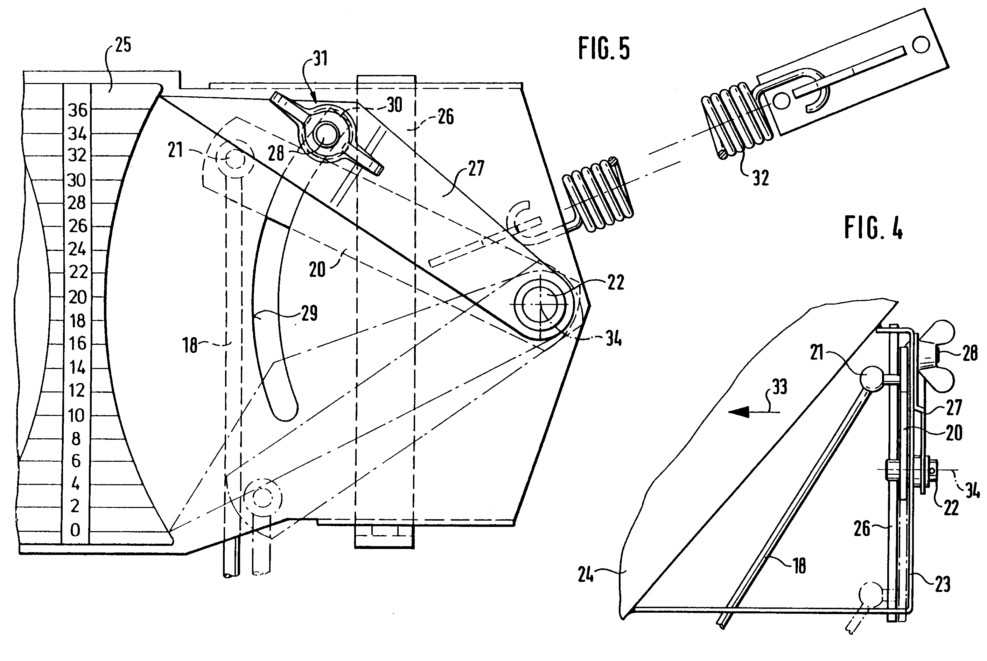

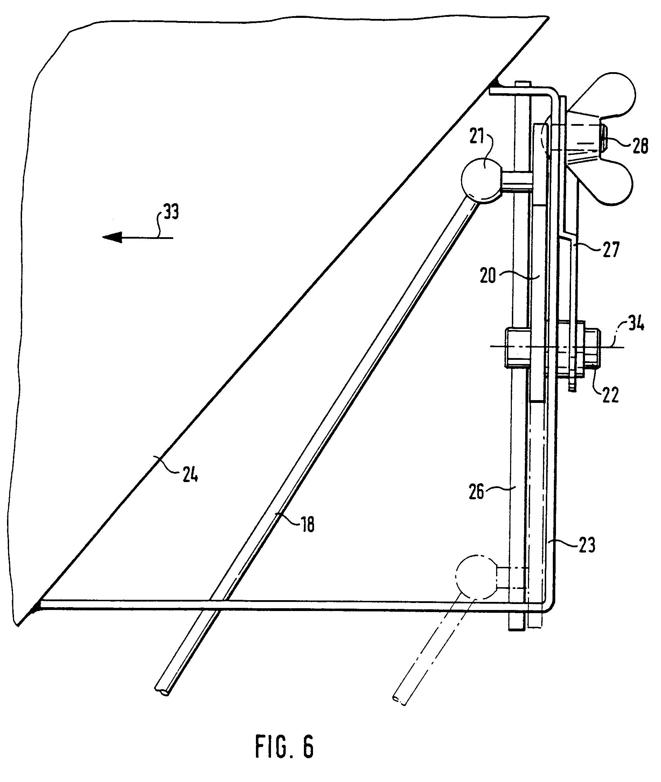

Der Zentrifugaldüngerstreuer gemäß der Fig.1-6 weist den Vorratsbehälter 1 und den Rahmen 2 auf. Am Rahmen 2 sind auf der Vorderseite die Dreipunktkupplungselemente 3 angeordnet, über welche der Zentrifugaldüngerstreuer an den Dreipunktkraftheber eines nicht dargestellten Schleppers anzubauen ist. Der Vorratsbehälter 1 ist in seinem unteren Bereich durch das dachförmige Mittelteil 4 in die beiden Auslauftrichter 5 aufgeteilt. Im unteren Bereich der Seitenwände 6 des dachförmigen Mittelteiles 4 sind die Auslauföffnungen 7 angeordnet. Vor den Auslauföffnungen 7 ist jeweils ein Schieber 8 angeordnet, mittels welchen die Öffnungsweite der jeweiligenAuslauföffnungen 7 einzustellen und die Auslauföffnungen zu verschließen ist.

Unterhalb der Auslauföffnung 5 sind die Schleuderscheiben 9 mit ihren Wurfelementen 10 und 11 auf den Getriebeausgangswellen 12 des Getriebes 13, welches am Rahmen 2 befestigt ist, angeordnet. Über das Getriebe 13 werden die Schleuderscheiben 9 im entgegengesetzten Drehsinn zueinander rotierend angetrieben, und zwar in der Weise, daß sie im mittleren Bereich vorne aufeinander zulaufen. Auf dem oberen Ende der Getriebeausgangswellen 12 ist oberhalb der Schleuderscheiben 9 eine Rohrhülse 14 drehfest angeordnet. Die Rohrhülse 14 ist mit der Getriebeausgangswelle 12 verbunden. Auf der Rohrhülse 14 ist das sich im unteren Bereich des Vorratsbehälters 1 vor der Auslauföffnung 7 sich befindende Rührorgan 15 angeordnet. Vor den Auslauföffnungen 7 befinden sich die Schieber 8 zur Einstellung der Öffnungsgröße der Auslauföffnung 7. Die Schieber 8 bilden zusammen mit den Auslauföffnungen 7 die Dosierorgane 16.

Den Schiebern 8 sind die als Hydraulikzylinder 17 ausgebildeten Betätigungselemente zugeordnet. Mittels dieser Hydraulikzylinder 17 werden die Schieber 8 in Schließstellung gebracht, so daß die Auflauföffnungen 7 verschlossen sind. Desweiteren sind an den Schiebern 8 die Verbindungselemente 18 mittels als Kugelköpfe 19 ausgebildeten Gelenke angeordnet. Diese Verbindungselemente 18 sind an einem Hebel 20 mittels das als Kugelkopf 21 ausgebildetem Gelenkes angeordnet. Dieser Hebel 20 ist schwenkbar auf dem Bolzen 22 an dem Halteelement 23 angeordnet. Das Halteelement 23 ist an der Rückwand 24 des Vorratsbehälters 1 befestigt. An dem Halteelement 23 ist die Skala 25 angeordnet. Hinter dem Halteelement 23 befindet sich das Gegenhalteelement 26 in einem Abstand zu dem Halteelement 23. Zwischen dem Gegenhaltelement 26 und dem Halteelement 24 wird der Hebel 20 geführt. Auf der Vorderseite des Halteelementes 23 ist auf dem Bolzen 22 der Zeiger 27 schwenkbar gelagert. Der an dem Zeiger 27 angeordnete Bolzen 28 durchsetzt ein in dem Haltelement 23 bogenförmig angeordnetes Langloch 29. Auf der Rückseite des Halteelementes 23 ist auf dem Bolzen 28 ist der Ansatz 30 angeordnet, der den Anschlag 31 für den Hebel 20 bildet. Anhand der Skala 25 läßt sich der Zeiger 27 und somit der Anschlag 31 für den Einstellhebel 20 entsprechend der gewünschten Ausbringmenge einstellen. In der in Fig.1 gezeigten Position befinden sich die Anschläge 31 in der Position fuhr die größtmögliche Ausbringmenge. Die Schieber 8 sind ebenfalls in der größten möglichen Öffnungstellung für die Auflauföffnungen 7 eingezeichnet. In den mit strichpunktierten Linien dargestellten Positionen befinden sich die Hebel 20 in der geschlossen Position für die Schieber 8. An dem Hebel 20 greift jeweils eine Zugfeder 32 an, die an dem Vorratsbehälter 1 befestigt ist. Die Feder 32 ist an dem Einstellhebel 20 derart angeordnet, daß die Verbindungselemente 18 immer auf Zug belastet sind. Somit zieht also die Feder 32 die Schieber 8 in Richtung ihrer Öffnungstellung für die Auslauföffnungen 7. Hierdurch wird erreicht, daß die Schieber 8 immer in die gewünschten Öffnungsposition gebracht werden. Somit wird also evtl. in dem Verbindungsgestänge 18 vorhandenes Spiel ausgeschaltet.

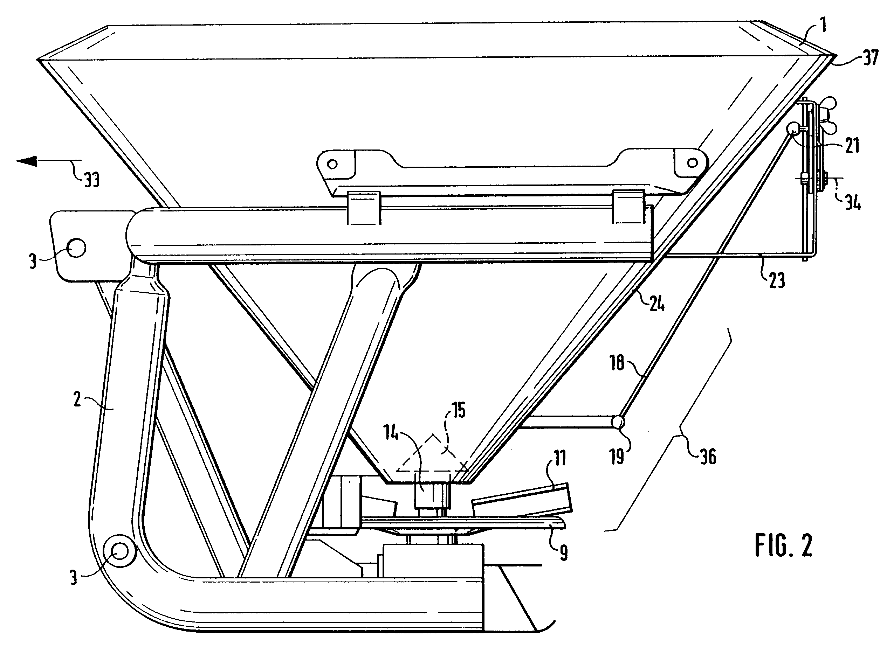

Die Einstellhebel 20 sind um eine in Fahrtrichtung 33 verlaufende Achse 34, die durch die Bolzen 22 verläuft angeordnet, schwenkbar am Streuer befestigt. Die Anschläge 31 mit den Skalen 25 befinden sich im hinteren-oberen, nach oben verlaufenden Bereich 35 des Vorratsbehälters 1. Die Einstellhebel 20 sind möglichst dicht an der hinteren Vorratsbehälterwand 24 liegend angeordnet. Desweiteren sind die Einstellhebel 20, Anschläge 31 und Skalen 25 zumindest 40-50 cm oberhalb der Streuorgane 10 angeordnet. Somit befinden sich die Einstellhebel 20, Skalen 25 und Anschläge 31 außerhalb des Bereiches 36, in dem sich während des Betriebes Düngerstaub ablagert. Die Skalen 25 reichen etwa bis an das obere Ende 37 des trichterförmigen Bereiches des Vorratsbehälters 1. Die Anschläge 31 und Skalen 25 sind in einer aufrechten Ebene am Vorratsbehälter befestigt. Die Verbindungsstangen 18 können an der Vorratsbehälterwand 24 verlaufen, wie es in Fig.2 dargestellt wird. Falls gewünscht, können die Stangen 18 unmittelbar an die Vorratsbehälterwand 24 mit einem kleinen Spalt anschließen.

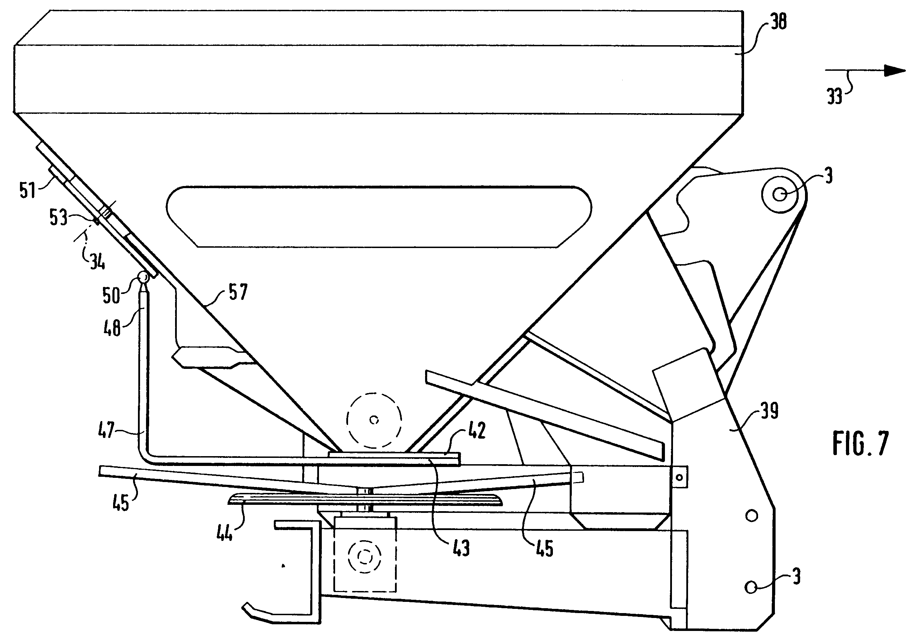

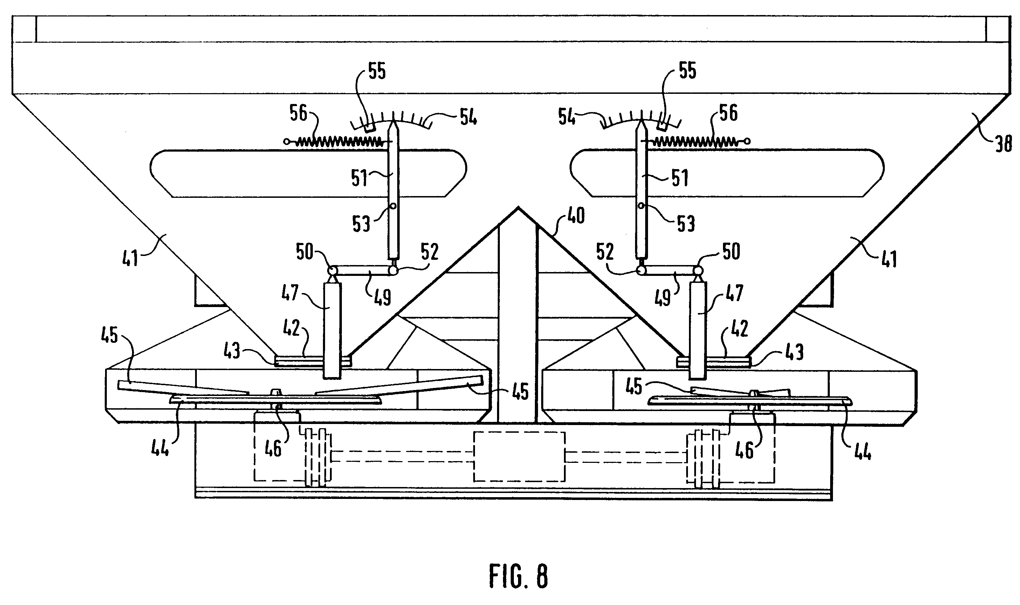

Der Düngerstreuer gemäß der Fig.7 und 8 weist den Vorratsbehälter 38 und den Rahmen 39 auf. Am Rahmen 39 sind auf der Vorderseite die Dreipunktkupplungselemente 3 angeordnet, über welche der Zentrifugaldüngerstreuer an den Dreipunktkraftheber eines nicht dargestellten Schleppers anzubauen ist. Der Vorratsbehälter 38 ist in seinem unteren Bereich durch das dachförmige Mittelteil 40 in die beiden Auslauftrichter 41 aufgeteilt. Die beiden Auslauftrichter 41 werden durch Bodenplatten 42 abgeschlossen, in denen sich jeweils eine Auflauföffnung befindet. Unterhalb der Bodenplatte befindet sich jeweils ein Schieber 43, mittels welchem die Öffnungsweite der Auflauföffnung einzustellen und zu verschließen ist.

Unterhalb jeder Bodenplatte 42 bzw. jeder Auflauföffnung ist eine Schleuderscheibe 44 mit Wurfelementen 45 auf den Getriebeausgangswellen 46 des Getriebes angeordnet. Über die Getriebe werden die Schleuderscheiben 44 im entgegengesetzten Drehsinn rotierend zueinander angetrieben.

Den Schiebern 43 sind als Hydraulikzylinder ausgebildete Betätigungselemente, die nicht dargestellt sind, zugeordnet. Mittels der Hydraulikzylinder werden die Schieber 43 in Schließstellung gebracht, so daß die Auslauföffnungen verschlossen sind. Desweiteren sind an den Schiebern 43 Verlängerungshebel 47 befestigt. An den Enden 48 der Verlängerungshebel 47 sind Verbindungselemente 49 mittels der als Kugelköpfe 50 ausgebildeten Gelenken angeordnet. Die Verbindungselemente 49 sind weiterhin an ihrer anderen Seite an einem Einstellhebel 51 mittels eines als Kugelkopf 51 ausgebildeten Gelenkes angeordnet. Dieser Einstellhebel 51 ist schwenkbar auf dem Bolzen 53, der an dem Behälter 38 befestigt ist, angeordnet. Dem äußeren Ende des Einstellhebel 51 ist eine Skala 54 und ein als Anschlag wirkendes Einstellelement 55, welches an Hand der Skala 54 eingestellt werden kann, zugeordnet. Der Anschlag 55 ist verstellbar und in exakt definierten Positionen einstellbar. Zwischen dem äußeren Ende des Einstellhebels 51 und dem Vorratsbehälter 38 ist eine Feder 56 derart angeordnet, daß die Feder 56 den Schieber 43 in Richtung seiner Öffnungstellung zieht. Die Zugfeder 56 zieht den Einstellhebel 51 gegen den Anschlag 55, somit wird der Schieber 43 immer in der gewünschten Öffnungsposition gebracht. Die Feder 56 ist derart angeordnet, daß sie den Schieber 43 aufzieht, somit wird evtl. in dem Übertragungsgestänge vorhandenes Spiel ausgeschaltet.

Der Einstellhebel 51 ist jeweils um eine in Fahrtrichtung 33 verlaufende Achse 34, die durch den Bolzen 53 verläuft angeordnet und schwenkbar am Streuer befestigt. Die Anschläge 55 mit den Skalen 54 befinden sich im hinteren oberen, vorzugsweise schräg nach oben verlaufenden Bereich des Vorratsbehälters 38. Die Einstellhebel 51 sind möglichst dicht an der hinteren Vorratsbehälterwand 57 liegend angeordnet. Die Einstellhebel 51, Anschläge 55 und Skalen 54 befinden sich zumindest 40-50 cm oberhalb der Streuorgane 44. Somit befinden sich die Skalen 54 und Anschläge 55 außerhalb des Bereiches, in dem sich während des Betriebes Düngerstaub ablagert.

## Patentansprüche

1. Zentrifugaldüngerstreuer mit einem Vorratsbehälter (1), in dessen unterem Bereich zumindest zwei Auslauföffnungen (7), welche durch Schieber (8) in ihrer Öffnungsweite einstellbar und verschließbar sind, angeordnet sind, wobei unter den Auslauföffnungen (7) angetriebene Streuorgane angeordnet sind, wobei die Öffnungsweiten der Auslauföffnungen (7) durch mit Schiebern zusammenwirkende und auf der Rückseite des Streuers angeordneten Einstellhebeln (20,21) und auf der Rückseite des Streuers mit Skalen (25,54) zusammenwirkende Anschläge (31,55) festlegbar sind, wobei die Anschläge (31,55) und die Schieber (8) und/oder die Einstellhebel (20,21) unabhängig voneinander einstellbar sind, dadurch gekennzeichnet, daß die Einstellhebel (20,21) jeweils um eine zumindest annähernd in Fahrtrichtung (33) verlaufende Achse (34) schwenkbar am Streuer angeordnet sind, daß die Anschläge (31,55) mit den Skalen (25,54) zumindest im hinteren-oberen, nach oben verlaufenden Bereich des Vorratsbehälters (1,38) angeordnet sind, und daß die Einstellhebel (20,51) möglichst dicht an der hinteren Vorratsbehälterwand (24) liegend sich befinden.

2. Zentrifugaldüngerstreuer nach Anspruch 1, dadurch gekennzeichnet, daß zwischen den Schiebern (8,43) und/oder den Übertragungshebeln (18,49) einerseits und den Einstellhebeln (20,51) andererseits mittels Gelenken Verbindungselemente angeordnet sind.

3. Zentrifugaldüngerstreuer nach einem oder mehreren der vorstehenden Ansprüche, dadurch gekennzeichnet, daß die Gelenke als Kugelköpfe (21,50,52) ausgebildet sind.

4. Zentrifugaldüngerstreuer nach einem oder mehreren der vorstehenden Ansprüche, dadurch gekennzeichnet, daß die Verbindungselemente als elastisch gefederte Streben ausgebildet sind.

5. Zentrifugaldüngerstreuer nach einem oder mehreren der vorstehenden Ansprüche, dadurch gekennzeichnet daß zwischen dem Vorratsbehälter (1,38) und/oder Rahmen (2,39) und den Einstellhebeln (20,51) Federn (32,56) derart angeordnet sind. daß die Verbindungselemente immer auf Zug belastet sind.

6. Zentrifugaldüngerstreuer nach einem oder mehreren der vorstehenden Ansprüche, dadurch gekennzeichnet, daß die Einstellhebel (20,51), Anschläge (31,55) und Skalen (24,54) sich zumindest 40-50 cm oberhalb der Streuorgane befinden.

7. Zentrifugaldüngerstreuer nach einem oder mehreren der vorstehenden Ansprüche, dadurch gekennzeichnet, daß die Einstellhebel (20,51), Skalen (24,54) und Anschläge (31,55) außerhalb des Bereiches, in dem sich während des Betriebes Düngerstaub ablagert, angeordnet sind.

8. Zentrifugaldüngerstreuer nach einem oder mehreren der vorstehenden Ansprüche, dadurch gekennzeichnet, daß die Skalen (24,54) zumindest annähernd bis an das obere Ende des trichterförmigen Bereiches des Vorratsbehälters (1,38) reichen.

9. Zentrifugaldüngerstreuer nach einem oder mehreren der vorstehenden Ansprüche, dadurch gekennzeichnet, daß die Skalen (24,54) und Anschläge (31,55) in einer aufrechten Ebene angeordnet sind.

10. Zentrifugaldüngerstreuer nach einem oder mehreren der vorstehenden Ansprüche, dadurch gekennzeichnet, daß die Skalen (24,54) und Anschläge (31,55) leicht schräg von oben nach hinten verlaufend angeordnet sind.

## Claims

1. Centrifugal fertilizer broadcaster provided with a hopper (1), at least two outlet apertures (7) being provided in the lower region of said hopper, which apertures are adjustable and closable in respect of their width of opening by sliders (8), driven scattering elements being disposed beneath the outlet apertures (7), the widths of opening of the outlet apertures (7) being determinable by adjusting levers (20,21 51), which co-operate with sliders and are disposed on the rear side of the broadcaster, and by stop members (31,55) which co-operate with scales (25,54) on the rear side of the broadcaster, the stop members (31,55) and the sliders (8) and/or the adjusting levers (20,21 51) being adjustable independently of one another, characterised in that the adjusting levers (20,21 51) are each disposed on the broadcaster so as to be pivotable about an axis (34), which extends at least approximately in the direction of travel (33), in that the stop members (31,55), together with the scales (25,54), are disposed at least in the rear-upper, upwardly extending region of the hopper (1,38), and in that the adjusting levers (20,51) are situated so as to lie as close as possible to the rear hopper wall (24).

2. Centrifugal fertilizer broadcaster according to claim 1, characterised in that connection members are disposed between the sliders (8,43) and/or the transmission levers (18,49), on the one hand, and the adjusting levers (20,51), on the other hand, by means of pivot joints.

3. Centrifugal fertilizer broadcaster according to one or more of the preceding claims, characterised in that the pivot] joints are configured as spherical ends (21,50,52).

4. Centrifugal fertilizer broadcaster according to one or more of the preceding claims, characterised in that the connection members are configured as resiliently sprung struts.

5. Centrifugal fertilizer broadcaster according to one or more of the preceding claims, characterised in that springs (32,56) are disposed between the hopper (1,38) and/or frame (2,39) and the adjusting levers (20,51) in such a manner that the connection members are always tensilely loaded.

6. Centrifugal fertilizer broadcaster according to one or more of the preceding claims, characterised in that the adjusting levers (20,51), stop members (31,55) and scales (24 25,54) are situated at least 40-50 cm above the scattering elements.

7. Centrifugal fertilizer broadcaster according to one or more of the preceding claims, characterised in that the adjusting levers (20,51), scales (24 25,54) and stop members (31,55) are disposed externally of the region in which powdered fertilizer is deposited during the operation.

8. Centrifugal fertilizer broadcaster according to one or more of the preceding claims, characterised in that the scales (24 25,54) extend at least approximately to the upper end of the funnel-shaped region of the hopper (1,38).

9. Centrifugal fertilizer broadcaster according to one or more of the preceding claims, characterised in that the scales (24 25,54) and stop members (31,55) are disposed in an upwardly extending plane.

10. Centrifugal fertilizer broadcaster according to one or more of the preceding claims, characterised in that the scales (24 25,54) and stop members (31,55) are disposed so as to extend slightly inclinedly upwardly and rearwardly.

## Revendications

1. Epandeur centrifuge d'engrais comprenant un réservoir d'alimentation (1) avec dans sa zone inférieure au moins deux orifices de sortie (7) dont le degré d'ouverture se règle par des tiroirs (8) et peut être fermé, et sous les orifices de sortie (7) se trouvent des organes de commande entraînés, le degré d'ouverture des orifices de sortie (7) étant fixé par les tiroirs coopérant avec des leviers de réglage (20, 21) prévus sur le côté arrière de l'épandeur et pouvant être fixés par des butées (31, 55) coopérant sur le côté arrière de l'épandeur avec des échelles (25, 54), les butées (31, 55) et les tiroirs (8) et/ou les leviers de réglage (20, 21) se réglant indépendamment les uns des autres,
caractérisé en ce que
le levier de réglage (20, 21) peut pivoter chaque fois autour d'un axe (34) passant au moins dans la direction de déplacement (33), pour que les butées (31, 55) avec les échelles (25, 54) se trouvent au moins dans la partie arrière supérieure, c'est-à-dire la zone du réservoir d'alimentation (1, 38) dirigée vers le haut et vers l'arrière et en ce que les leviers de réglage (20, 51) se trouvent aussi près que possible de la paroi de réservoir (24) correspondante.

2. Epandeur centrifuge d'engrais selon la revendication 1,
caractérisé en ce qu'
entre les tiroirs (8, 43) et/ou les leviers de transmission (18, 49) d'une part et les leviers de réglage (20, 51) d'autre part, les éléments de liaison sont articulés.

3. Epandeur centrifuge d'engrais selon l'une ou plusieurs des revendications précédentes,
caractérisé en ce que
les articulations sont des rotules (21, 50, 52).

4. Epandeur centrifuge d'engrais selon l'une ou plusieurs des revendications précédentes,
caractérisé en ce que
les éléments de liaison sont des entretoises élastiques à ressort.

5. Epandeur centrifuge d'engrais selon l'une ou plusieurs des revendications précédentes,
caractérisé en ce qu'
entre le réservoir d'alimentation (1, 38) et/ou le châssis (2, 39) et les leviers de réglage (20, 51), il y a des ressorts (32, 56) qui chargent toujours en traction les éléments de liaison.

6. Epandeur centrifuge d'engrais selon l'une ou plusieurs des revendications précédentes,
caractérisé en ce que
les leviers de réglage (20, 51), les butées (31, 55) et les échelles (24, 54) se trouvent au moins à 40-50 cm au-dessus des organes d'épandage.

7. Epandeur centrifuge d'engrais selon une ou plusieurs des revendications précédentes,
caractérisé en ce que
les leviers de réglage (20, 51), les échelles (24, 54) et les butées (31, 55) se trouvent en dehors de la zone dans laquelle se dépose la poussière pendant le fonctionnement de l'épandeur centrifuge.

8. Epandeur centrifuge d'engrais selon l'une ou plusieurs des revendications précédentes,
caractérisé en ce que
les échelles (24, 54) arrivent au moins approximativement jusqu'à l'extrémité supérieure de la zone en forme de trémie du réservoir d'alimentation (1, 38).

9. Epandeur centrifuge d'engrais selon l'une ou plusieurs des revendications précédentes,
caractérisé en ce que
les échelles (24, 54) et les butées (31, 55) se trouvent dans un plan vertical.

10. Epandeur centrifuge d'engrais selon l'une ou plusieurs des revendications précédentes,
caractérisé en ce que
les échelles (24, 54) et les butées (31, 55) sont légèrement inclinées du haut vers l'arrière.
